# EUROPÄISCHE PATENTANMELDUNG

(11) **EP 2 642 239 A1**
(43) Veröffentlichungstag der Anmeldung: **25.09.2013**
(21) Anmeldenummer: 13001188.5
(22) Anmeldetag: 09.03.2013
(51) Int. Cl.: F41G 7/32, G05D 1/00

(54) **Waffensystem und Verfahren zum Lenken eines Wirkelements durch einen Schützen**

(30) Priorität: 21.03.2012 DE 102012005682
(71) Anmelder: Diehl BGT Defence GmbH & Co. KG, 88662 Überlingen (DE)
(72) Erfinder: Gundel, Bernd, 91284 Neuhaus (DE)
(74) Vertreter: Diehl Patentabteilung

(57) **Zusammenfassung**

Die Erfindung geht aus von einem Verfahren zum Lenken eines Wirkelements (10) durch einen Schützen in ein Ziel (16) mit einem Waffensystem (4), das eine Abfeuervorrichtung (8) zum Abfeuern des Wirkelements (10) aufweist.

Um dem Schützen eine Unterstützung zur Ausrichtung der Abfeuervorrichtung (8) oder zur Lenkung des fliegenden Wirkelements (10) zu geben, wird vorgeschlagen, dass ein Lageparameter eines Gebiets (18) ermittelt wird, innerhalb derer das Waffensystem (4) in seinem momentanen Zustand eine vorbestimmte Einsatzeigenschaft erreicht.

## Beschreibung

Die Erfindung betrifft ein Waffensystem und ein Verfahren zum Lenken eines Wirkelements durch einen Schützen in ein Ziel.

Beim Bekämpfen von Bodenzielen werden unter anderem Boden-Boden-Lenkflugkörper eingesetzt, die auf das Ziel abgefeuert werden und das Ziel selbstständig verfolgen. Hierzu wird der Lenkflugkörper von einer Abfeuervorrichtung abgefeuert und bleibt während des Flugs über eine sich abspulende Datenleitung mit der Abfeuervorrichtung verbunden. Lenkkommandos, die der Schütze an der Abfeuervorrichtung vornimmt, werden über die Datenleitung an den Lenkflugkörper übertragen, sodass dieser, geführt durch den Schützen, ins Ziel gelenkt wird.

Stehen dem Schützen mehrere beieinander liegende Ziele zur Auswahl, so kann es für den Schützen schwierig sein, das am besten geeignete Ziel auszuwählen und zu bekämpfen.

Es ist eine Aufgabe der Erfindung, ein Verfahren zum Lenken eines Wirkelements durch einen Schützen anzugeben, das eine Ziel- und/oder Navigationsunterstützung für den Schützen bietet.

Diese Aufgabe wird durch ein Verfahren der eingangs genannten Art gelöst, bei dem ein Waffensystem eine Abfeuervorrichtung zum Abfeuern des Wirkelements aufweist und bei dem erfindungsgemäß ein Lageparameter eines Gebiets ermittelt wird, innerhalb derer das Waffensystem in seinem momentanen Zustand eine vorbestimmte Einsatzeigenschaft erreicht. Durch die Bestimmung des Lageparameters kann dem Schützen Information über eine Wirkung eines abgefeuerten oder noch abzufeuernden Wirkelements im Zielgebiet gegeben werden, so dass der Schütze erfährt, wohin er das Wirkelement abschießen muss oder wie er das Wirkelement in seinem Flug lenken soll.

Vorteilhafterweise enthält das Waffensystem eine Anzeigevorrichtung für den Schützen und ein vom Lageparameter abhängiger Hinweis wird auf der Abbildungsvorrichtung abgebildet. Der Schütze kann die Unterstützung für ein Zielen und/oder Navigieren direkt visuell erhalten.

Die Erfindung geht von der Überlegung aus, dass es bei Vorhandensein einer Datenleitung zwischen der Abfeuervorrichtung und dem Lenkflugkörper - beziehungsweise allgemeiner: dem Wirkelement - möglich ist, bewegte Bilder zur Abfeuervorrichtung zu übertragen. Ist eine Kamera im Wirkelement vorhanden, können dem Schützen Bilder vom Anflug des Wirkelements auf das Ziel übertragen werden. Je weiter sich das Wirkelement dem Ziel nähert, desto höher aufgelöst werden die Bilder und der Schütze kann immer besser entscheiden, welches Ziel in einer Gruppe von Zielen er durch das Wirkelement ansteuern will. So kann beispielsweise in den letzten Momenten des Anflugs ein Täuschungspanzer aus Kunststoff erkannt werden oder ein Führungspanzer in der Gruppe ausgemacht werden.

Durch die Lenkbarkeit des Wirkelements von der Abfeuervorrichtung aus kann der Schütze - im Falle von nahe zusammenstehenden Zielen - auch im Endanflug noch ein Ziel auswählen beziehungsweise die Ziele wechseln. Das Zielwechselpotential nimmt dabei während des Fluges kontinuierlich ab, das heißt, je später der Zielwechsel erfolgt, desto geringer ist das Erreichbarkeitsgebiet des Wirkelements, also das Gebiet, das das Wirkelement noch anfliegen kann. Entsprechend wird auch die dann noch erreichbare Zielwechseldistanz zwischen den Zielen immer kleiner. Je länger der Schütze allerdings mit dem Zielwechsel warten kann, desto besser ist dies für die Sicherheit, die richtige Entscheidung zu treffen, da mit einer längeren Entscheidungsfrist ein genaueres Abbild des Ziels beziehungsweise der Zielgruppe vorhanden ist.

Durch das Ermitteln des Lageparameters des Gebiets, kann dem Schützen mitgeteilt werden, welche Eigenschaft sein Waffensystem im Gebiet erreichen kann bzw. welches Gebiet mit welcher Einsatzeigenschaft verknüpft ist. Bei dem vorangegangenen Beispiel, ist der Lageparameter z.B. das Gebiet oder die Grenze des Gebiets, innerhalb dessen das Waffensystem in seinem momentanen Zustand Ziele noch erreichen kann. Dieses Gebiet kann dem Schützen angezeigt werden, so dass er darüber aufgeklärt wird, welche Ziele er noch anfliegen kann und welche mittlerweile ausserhalb seiner Reichweite liegen. Weiter kann der Schütze abschätzen, bis wann er noch ein Alternativziel innerhalb des Gebiets erreichen kann. Mit Hilfe dieser Information kann der Schütze notfalls bis zum letzten Moment abwarten, bevor er die Zielauswahl noch im Endanflug trifft. Es können Zielauswahlfehler verringert werden und Kollateralschäden vermieden werden.

Der Lageparameter kann die Größe und Lage eines Gebiets sein. Auch eine zeitliche Veränderung des Gebiets kann der Lageparameter sein. Die Einsatzeigenschaft kann eine Erreichbarkeit durch das Wirkelement bzw. das Waffensystem sein oder eine Steuerbarkeit durch den Schützen. Die Einsatzeigenschaft kann auch eine vorbestimmte Wirkung sein, z.B. eine Aufklärung eines Gebiets, ein Abwurf eines Wirkmittels oder eine bestimmte Zerstörungskraft, z.B. eine Letalität für ungeschützte Personen.

Das Wirkelement kann ein Lenkflugkörper sein, der angetrieben oder rein ballistisch fliegt. Ein Beispiel sind Panzerabwehrwaffen oder allgemein panzerbrechende Waffen, auch lenkbare Artilleriemunition ist möglich. Alternativ kann das Wirkelement ein nicht lenkbarer Flugkörper sein, beispielsweise eine Splittergranate oder ein anderes Geschoss. Das Ziel kann ein Zielobjekt, wie ein Land- oder Luft- oder Wasserfahrzeug, oder ein Gebäude oder ein anderes Objekt sein, oder ein Zielgebiet, das beispielsweise durch geografische Angaben festgelegt ist.

Vorteilhafterweise ist der Lageparameter die Lage eines Gebiets und/oder dessen Grenze oder Grenzen, insbesondere in einer Landschaft. Die Grenze kann eine scharfe Grenze sein oder ein Grenzgebiet festlegen, dessen Erreichen oder Verlassen einem Grenzübertritt gleichgesetzt werden kann. Auch Unschärfebereiche oder Sicherheitszuschläge oder -abschläge oder andere Korrekturfaktoren, die situationsabhängig oder nicht genau definiert sein müssen, sind möglich. Ebenfalls ist es möglich, dass eine Grenze berechnet und eine weitere Grenze in einem vorbestimmten Abstand davon oder in vorgegebenen Kriterien dazu gesetzt und für Aktionen verwendet wird. Auch Kriterien in Bezug zu einer Grenze können als eigene Grenze im Sinne der Erfindung verstanden werden. Ebenfalls sind verschiedene Grenzen für verschiedene Aktionen beziehungsweise Verfahrensdetails möglich.

Der momentane Zustand kann ein Ort, eine Geschwindigkeit und/oder eine Ausrichtung des Wirkelements, beispielsweise eines Lenkflugkörpers, sein. Ebenfalls möglich ist ein Ort und/oder eine Ausrichtung der Abfeuervorrichtung. Weiter ist als momentaner Zustand ein Zustand des Wirkelements denkbar, beispielsweise ein Ladezustand, ein Programmzustand, ein Steuerzustand und/oder ein Sicherungszustand.

Auch für die vorbestimmte Einsatzeigenschaft gibt es verschiedene Möglichkeiten. Wie beschrieben kann die Einsatzeigenschaft eine Erreichbarkeit und das Gebiet ein Erreichbarkeitsgebiet sein, das für das aus der Abfeuervorrichtung abgefeuerte und durch den Schützen im Flug steuerbare Wirkelement zum momentanen Flugzeitpunkt noch erreichbar ist. Hierbei ist zweckmäßigerweise die gesamte Fläche des Erreichbarkeitsgebiets noch erreichbar, wobei Verdeckungen, Absenkungen oder Geländeeigenschaften durchaus Punkte innerhalb des Erreichbarkeitsgebiets schaffen können, die aus geländespezifischen Gründen tatsächlich nicht erreichbar sind. Eine Fläche außerhalb der Grenze ist insbesondere nicht mehr erreichbar, zum Beispiel weil die kinetische Energie des Wirkelements hierfür nicht ausreicht, eine zu scharfe Kurve geflogen werden müsste und/oder aus anderen Gründen. Die Erreichbarkeit kann durch die aktuelle Reichweite des Lenkflugkörpers vorgegeben sein, die sich aus den aktuellen Flugdaten ergibt. Der aktuelle Flugzeitpunkt ist zweckmäßigerweise auch der Anzeigezeitpunkt, wobei eine kleine Zeitverzögerung möglich ist.

Die vorbestimmte Einsatzeigenschaft kann in einer weiteren zweckmäßigen Ausgestaltung der Erfindung eine Steuerbarkeit des Wirkelements sein. Die Grenze könnte in diesem Fall ein Faserabriss sein, also die Entfernung des Wirkelements zur Abfeuervorrichtung angeben, in der das Datenkabel, üblicherweise eine Glasfaser, ihre maximale Abspullänge erreicht hat und darüber hinaus abreißt. Nach diesem Punkt ist das Wirkelement üblicherweise nicht mehr durch den Schützen beziehungsweise die Abfeuervorrichtung steuerbar, weshalb das Wirkelement dann selbstständig auf das Ziel zusteuernd weiterfliegt oder unkontrolliert abstürzt.

Eine weitere vorteilhafte Einsatzeigenschaft ist eine Kampfwirkung. So kann es für den Schützen von Vorteil sein, das Gebiet zu kennen, in dem das von ihm abgeschossene oder abzuschießende Wirkelement eine erwünschte Wirkung entfaltet beziehungsweise eine unerwünschte Wirkung gerade nicht entfaltet. So kann der Schütze die Abfeuervorrichtung so halten, dass das Wirkelement, beispielsweise eine Splittergranate, keine Zivilisten tötet, die beispielsweise in der Nähe des Ziels stehen. Entsprechend kann die Grenze eine Wirkungsgrenze und der Bereich ein Wirkungsbereich, beispielsweise ein letaler Bereich für ungeschützte Personen, sein.

In einer vorteilhaften Ausführungsform der Erfindung weist das Waffensystem eine Anzeigevorrichtung für den Schützen auf, wobei auf der Abbildungsvorrichtung ein vom Lageparameter, z.B. einer Grenze, abhängiger Hinweis abgebildet wird. Der Schütze kann unmittelbar visuell erkennen, ob mehrere Ziele noch in beispielsweise einem Erreichbarkeitsgebiet liegen, sodass noch die Möglichkeit für einen Zielwechsel besteht. Alternativ kann ihm ein letaler Bereich angezeigt werden, sodass er die Abfeuervorrichtung entsprechend ausrichten kann.

Der Hinweis kann ein symbolischer Hinweis sein, beispielsweise ein Pfeil, ein Balken, der auch größer oder kleiner entsprechend einer Parametereigenschaft werden kann, ein Piktogramm oder Ähnliches. Der Hinweis kann auch die Abbildung einer Grenze an sich sein, zum Beispiel eines Teils einer Grenze, eines Grenzbereichs oder dergleichen. Der Hinweis kann vor, während oder nach dem Abschuss abgebildet werden, insbesondere während des Flugs des Wirkelements. Der Hinweis kann in oder neben oder über einem Bild angezeigt werden und Zahlen oder Buchstaben oder eine sonstige Angabe enthalten, insbesondere solche Angaben, die darauf hinweisen, wann das Wirkelement die Grenze erreicht oder wenn ein Ziel aus dem ermittelten Gebiet herauswandert beziehungsweise die Grenze überschreitet. Der Hinweis ist in seiner Art oder seinem Informationsgehalt abhängig vom Lageparameter, z.B. der Grenze. Hierzu wird die Hinweisinformation zweckmäßigerweise unter Verwendung von Parameter- bzw. Grenzdaten berechnet.

Eine weitere vorteilhafte Ausführungsform der Erfindung schlägt vor, dass ein Zielgebiet auf der Anzeigevorrichtung abgebildet wird. Der Schütze kann einfach die Umgebung erkennen, auf die das Wirkelement zufliegt. Zweckmäßigerweise ist auch das anvisierte Ziel abgebildet, sodass ein Anflug auf das Ziel oder ein alternatives Ziel erleichtert wird. Das Zielgebiet ist eine Umgebung des das Ziel umfassenden Gebietes. Die Abbildung des Zielgebiets kann als Realbild oder ganz oder teilweise abstrahiert erfolgen. Weiter ist es vorteilhaft, wenn der Hinweis - in Abhängigkeit von der Lage der Grenze im Bildausschnitt - in die Abbildung des Zielgebiets eingeblendet wird.

Weiter ist es vorteilhaft, wenn bei der Ermittlung der Grenze eine Kinematik des aus der Abfeuervorrichtung abgefeuerten Wirkelements berücksichtigt wird. Die Kinematik kann eine Flugeigenschaft, eine Lenkeigenschaft und/oder andere Lenk- oder Steuereigenschaften umfassen.

In einer weiteren vorteilhaften Ausgestaltung der Erfindung wird vorgeschlagen, dass bei der Ermittlung der Grenze der Abstand des Wirkelements zum Ziel berücksichtigt wird und/oder dessen Fluggeschwindigkeit und/oder seine Höhe über dem Ziel. Diese Parameter können beispielsweise aus einer Flugbahn, die vorgegeben sein kann, ermittelt werden.

Üblicherweise ist eine aktive Abstandsmessung durch das Wirkelement nicht erwünscht. Zur passiven Ermittlung des Abstands erfolgt vorteilhafterweise ein Bildabgleich des Ziels mit Bildern einer Bibliothek mit größengestaffelten Abbildern typischer Ziele. Ist das Ziel als solches in der Bildbibliothek erfasst, so kann anhand der Größe der Abbildung des Ziels dessen Abstand zum Wirkelement abgeschätzt beziehungsweise ermittelt werden.

Weiter wird vorgeschlagen, dass bei der Ermittlung der Grenze eine Topografie eines Zielgebiets um das Ziel berücksichtigt wird. Hierbei kann berücksichtigt werden, dass die Reichweite eines Wirkelements in einem abschüssigen Gelände größer ist als in einem ebenen oder sogar einem ansteigenden Gelände. Die Berechnung kann unter Verwendung einer Topografiedatenbank erfolgen, in der beispielsweise die Topografie der überflogenen Landschaft abgespeichert ist. Ebenfalls möglich ist eine Ermittlung aus optischen Daten, die durch das Wirkelement selbst erfasst sind. So kann aus einer optischen Wanderung von Landschaftspunkten relativ zueinander während des Flugs geschlossen werden, ob Erhebungen oder Senken überflogen werden, da sich Erhebungen schneller relativ zum Wirkelement bewegen als Senken.

Zweckmäßigerweise wird bei der Ermittlung der Grenzen eine Bewegung des Ziels berücksichtigt. Bewegt sich das Ziel beispielsweise durch eine Landschaft, so kann das das Ziel ansteuernde Wirkelement der Bewegung des Ziels nachsteuern. Dies kann durch ein sogenanntes Lock-On geschehen, das zweckmäßigerweise durch den Schützen vorgenommen wir. Ein Lock-On kann eine Zielerfassung und Zielverfolgung sein oder beinhalten. Hierbei wird das Ziel optisch oder auf andere Weise so erfasst, dass es von einem Prozessmittel des Waffensystems im Verlaufe des Fluges fortwährend erkannt werden kann. Das Wirkelement steuert dem Ziel automatisch nach und die Grenzen wandern entsprechend mit dem Ziel mit.

Zur Durchführung eines Zielwechsels ist es vorteilhaft, wenn ein Lock-On während des Flugs des Wirkelements aufgehoben wird, und in Abhängigkeit davon, ob ein zweites Ziel innerhalb der Grenzen positioniert ist, ein neuer Lock-On auf das zweite Ziel durchgeführt wird. Befindet sich das zweite Ziel innerhalb der Grenzen, so kann der Schütze daraus ersehen, dass es sich beispielsweise noch im Erreichbarkeitsgebiet befindet. Ein Zielwechsel ist somit noch möglich. Ist das Ziel aus den Grenzen ausgewandert, hat also das Erreichbarkeitsgebiet verlassen, so wird das Wirkelement dieses zweite Ziel aller Voraussicht nach nicht mehr erreichen können. Ein Zielwechsel ist nicht mehr sinnvoll.

Es kann vorkommen, dass ein Schütze beim Abschuss und in einer ersten Phase des Fluges noch nicht entscheiden kann, welches Ziel aus einer Zielgruppe bekämpft werden soll. Wird das Wirkelement nun im weiteren Verlauf auf ein mögliches Ziel gesteuert, so wandern die anderen Ziele verhältnismäßig schnell aus dem Erreichbarkeitsgebiet heraus. Diese Situation kann verbessert werden, wenn während des Flugs des Wirkelements mehrere Ziele verfolgt werden und das Wirkelement, insbesondere für zumindest eine Sekunde, gezielt zwischen die Ziele gesteuert wird.

Wird beispielsweise mittig zwischen die beiden Ziele gesteuert, so wandern die beiden Ziele während des Flugs des Wirkkörpers im Wesentlichen gleichmäßig auf die Grenze zu, beispielsweise auf die linke und rechte Grenze auf der Anzeigevorrichtung des Schützen. Da der Bereich durch die Annäherung des Wirkkörpers an die Ziele immer kleiner wird, ist dies nur der letzte Zeitpunkt für einen Zielwechsel. Es kann ein Lock-On auf eines der beiden Ziele erfolgen, sodass das Wirkelement nun auf dieses Ziel eingeschwenkt wird. Das andere Ziel wird den Erreichbarkeitsbereich verlassen. Die Steuerung zwischen die Ziele kann manuell durch den Schützen erfolgen oder automatisch, beispielsweise durch einen Lock-On auf die mehreren Ziele oder einen Lock-On auf einen zwischen den beiden Zielen liegenden Gegenstand. Vorteilhafterweise erfolgt ein Lock-On auf eines der mehreren Ziele erst, wenn zumindest eines der Ziele die Grenze erreicht.

Weiter wird vorgeschlagen, dass eine Bewegung von zumindest zwei voneinander getrennten Zielen verfolgt wird und eine Flugsteuerung des Wirkelements in Abhängigkeit von der ermittelten Grenze vorgenommen wird, insbesondere automatisiert nach einem vorbestimmten Schema, beispielsweise so, dass keines der Ziele das eingegrenzte Gebiet verlässt. Hierdurch kann eine Steuerung des Wirkelements beispielsweise zwischen die beiden Ziele oder auf einen anderen geeigneten Ort automatisiert erfolgen. Bei der Verfolgung der Bewegung werden zweckmäßigerweise Ortskoordinaten der beiden Ziele ermittelt und in einem Datenspeicher abgespeichert. Die Ortskoordinaten können zwei- oder dreidimensional sein und können sich auf die Flugrichtung des Wirkelements beziehen, beispielsweise als Richtungsangaben. Die Bewegung kann relativ zum Flug des Wirkelements oder selbstständig erfolgen, beispielsweise indem sich ein oder beide Ziele selbstständig durch die Landschaft bewegen.

Das Verfolgen der Bewegung kann durch einen Lock-On auf die beiden Ziele oder in einer anderen Art und Weise erfolgen. Üblicherweise wird unter einem Lock-On verstanden, den Flugkörper auf das entsprechende Ziel zuzusteuern, um es schließlich zu treffen. Bei einem Mehrfach-Lock-On kann im Folgenden verstanden werden, dass mehrere Ziele wie bei einem üblichen Lock-On verfolgt werden, das Wirkelement jedoch nicht zwangsläufig auf eines der Ziele zugesteuert wird. Die Steuerung soll jedoch so erfolgen, dass ein Zusteuern auf alle Ziele möglich bleibt. Bei einem Mehrfach-Lock-On ist es also möglich, jederzeit bis zu einem finalen Entscheidungszeitpunkt eines der Ziele auszuwählen und einen Einzel-Lock-On mit einem Zusteuern auf das entsprechende Ziel durchzuführen.

Generell kann es vorkommen, dass eine Datenverbindung zwischen der Abfeuervorrichtung und dem Wirkelement abreißt, bevor eine Entscheidung für ein finales Lock-On getroffen ist. In einem solchen Fall kann es passieren, dass das Wirkelement führungslos weiterfliegt mit der entsprechenden Gefahr von Kollateralschäden. Um dieses zu vermeiden, ist es vorteilhaft, wenn eines der Ziele priorisiert wird. Zweckmäßigerweise bewirkt die Priorisierung, dass zu einem festgelegten Zeitpunkt oder einer festgelegten Flugsituation ein üblicher Lock-On auf das priorisierte Ziel erfolgt. Ein eventueller Mehrfach-Lock-On auf ein oder mehrere andere Ziele kann aufgehoben werden.

Zweckmäßigerweise erfolgt der übliche Lock-On auf das priorisierte Ziel erst dann, wenn zumindest eines der Ziele die Grenze erreicht. Der Wechsel vom Mehrfach-Lock-On zum Einzel-Lock-On erfolgt zweckmäßigerweise automatisch nach vorgegebenen Kriterien, beispielsweise wenn eines der Ziele die Grenze erreicht. Selbstverständlich ist es auch möglich, wenn der Schütze die Priorisierung vor oder während des Flugs manuell ändert. Um ein unkontrolliertes Fliegen des Wirkelements zu vermeiden, ist es weiter vorteilhaft, wenn ein Lock-On auf ein unpriorisiertes Ziel nur solange möglich ist, wie sich dieses unpriorisierte Ziel innerhalb eines Erreichbarkeitsgebiets befindet. Ein Lock-On-Wechsel auf ein Ziel außerhalb der Grenze kann somit verhindert werden. Selbstverständlich kann es dem Schützen ermöglicht werden, diese automatische Sperre aufzuheben.

Eine konkrete Durchführungsmöglichkeit eines Mehrfach-Lock-Ons sieht vor, dass das Wirkelement auf das priorisierte Ziel gelenkt wird, so lange bis ein unpriorisiertes Ziel die Grenze erreicht. Zweckmäßigerweise wird das Wirkelement dann so gesteuert, dass alle Ziele innerhalb der Grenze verbleiben. Weiter zweckmäßig wird das Wirkelement so gesteuert, dass alle Ziele so lange innerhalb der Grenze verbleiben, bis beide Ziele die Grenze erreichen. Dann ist es vorteilhaft, wenn das Wirkelement auf das priorisierte Ziel gelenkt wird, sodass das andere Ziel die Grenze überschreitet und das eingegrenzte Gebiet verlässt. Eine, mehrere oder alle diese Verfahrensschritte können automatisiert erfolgen, sodass ein Mehrfach-Lock-On auch nach dem Modus "fire-and-forget" geflogen werden kann. Der Schütze erhält jedoch lange die Möglichkeit, einen Zielwechsel zwischen den gelockten Zielen durchzuführen.

Bei panzerbrechenden oder bunkerbrechenden Einsätzen kann es vorkommen, dass ein Zugang zu einem Bunker oder anderen gepanzerten Objekt nur von einer dem Schützen abgewandten Seite möglich ist. Ein direktes Zufliegen auf das Ziel hätte den ungünstigen Effekt, dass das Wirkelement auf eine stark gepanzerte Seite des Objekts trifft und die Panzerung nicht durchbrechen kann. Der Schütze müsste daher manuell einen möglichst großen Bogen um das Ziel fliegen, um das Ziel dann von der günstigeren Seite des Eintritts aus anzufliegen.

Hierbei besteht das Problem, dass das Ziel bei einem Fliegen eines weiten Bogens aus dem Erreichbarkeitsgebiet des Wirkelements austreten kann und das Wirkelement das Ziel durch das Fliegen eines zu weiten Bogens dann nicht mehr erreicht. Dieser Nachteil kann durch die Ermittlung der Grenze eliminiert werden. Beim Fliegen des Wirkelements wird der Flug stets in Abhängigkeit von der ermittelten Grenze gesteuert, und zwar so, dass das Zielobjekt stets innerhalb der Grenze verbleibt. Diese Flugsteuerung kann automatisch oder manuell erfolgen. Das Wirkelement wird in seiner Flugrichtung also nur so weit abgewinkelt zur direkten Richtung auf das Ziel zufliegen, dass das Ziel stets innerhalb der Grenzen verbleibt. Entsprechendes kann bei einem Fliegen eines Bogens geschehen. Der Bogen wird so geflogen, dass das Ziel stets im Erreichbarkeitsgebiet verbleibt, so lange, bis das Ziel von einer gewünschten Richtung direkt angeflogen werden kann oder bis der Bogen das Ziel erreicht, das Wirkelement also in seinem gesamten Anflug einen Bogen geflogen ist und somit eine Anflugrichtung auf das Ziel erreicht, die maximal zur direkten Richtung vom Schütze zum Ziel abgewinkelt ist.

Hierzu wird vorgeschlagen, dass eine Anflugrichtung des Wirkelements auf das Ziel festgelegt wird, das Wirkelement in seinem Anflug auf das Ziel nur soweit vom Ziel ausgelenkt wird, dass es innerhalb der Grenze verbleibt, und das Wirkelement dann auf das Ziel eingeschwenkt wird, sodass es aus der Anflugrichtung auf dieses Ziel zufliegt. Im Extremfall kann das Wirkelement in seinem Anflug auf das Ziel soweit vom Ziel aus gelenkt werden, dass es die Grenze erreicht und eine Weile so fliegt, dass das Ziel auf der Grenze verbleibt. Hierbei ist es - wie oben bereits definiert - möglich, dass eine gewisse Sicherheitsentfernung zur Grenze eingehalten wird, das Ziel also stets einen Sicherheitsabstand innerhalb der Grenze verbleibt, wobei dieser Sicherheitsabstand dann ebenfalls als Grenze anzusehen sein kann. Ein Lock-On auf das Ziel kann vor dem Abschuss oder während des Flugs des Wirkelements erfolgen. Die gewünschte Anflugrichtung wird zweckmäßigerweise in einem Datenspeicher hinterlegt, sodass der automatisierte Anflug unter Berücksichtigung der Anflugrichtung durchgeführt werden kann.

Eine komplexe Flugsteuerung kann zwar viele Kampfmöglichkeiten erlauben, den Schützen in einer Kampfsituation jedoch auch überfordern mit der Gefahr eines falsch gesteuerten Flugs des Wirkelements. Es ist daher vorteilhaft, die Flugsteuerung automatisiert zu vereinfachen. Eine solche Möglichkeit besteht darin, dass dem Schützen auf der Anzeigevorrichtung nur das Erreichbarkeitsgebiet angezeigt wird. Die Abbildung ist somit abhängig von der Grenze nach dem Motto "you see what you get". Durch diese Sicherheitsvorkehrung wird der Schütze nicht dazu verleitet, einen Zielwechsel zu einem nicht mehr erreichbaren Ziel anstreben zu wollen, sondern er kann sich ganz auf das angeflogene Ziel konzentrieren. Vorteilhaft wäre es, wenn die Anzeigevorrichtung so ausgeführt ist, dass sie eine Wahl von verschiedenen Anzeigemodi zulässt. Ein Anzeigemodus könnte der oben beschriebene sein, bei dem das abgebildete Gebiet auf das Erreichbarkeitsgebiet beschränkt ist. In einem anderen Anzeigemodus könnte das abgebildete Gebiet über das Erreichbarkeitsgebiet hinausgehen.

In manchen Situationen kann es vorteilhaft sein, wenn der Schütze aus der Sicht des anfliegenden. Wirkelements sich einen Überbtick über die Umgebung verschafft. Es wäre dann sinnvoll, den Blick des Wirkelements in der Umgebung umherschweifen zu lassen, ohne jedoch den Flug des Wirkelements, beispielsweise auf ein Ziel zu, durch dieses Herumschweifen des Blickes zu stören. Entsprechend ist es vorteilhaft, wenn es dem Schützen ermöglicht wird, während des Fluges des Wirkelements ein auf der Anzeigevorrichtung abgebildetes Abbildungsgebiet in der Landschaft zu verschwenken, ohne dabei die Flugrichtung des Wirkelements zu beeinflussen. Die Darstellung der Grenzen auf der Anzeigevorrichtung wird hierbei zweckmäßigerweise ebenfalls verschwenkt, wobei auch Gebiete jenseits des eingegrenzten Gebiets dargestellt werden.

Eine weitere Ausführungsform der Erfindung sieht vor, dass ein Zeitpunkt eines Abrisses eines Datenkabels zwischen der Abfeuervorrichtung und dem Wirkelement ermittelt wird und dem Schützen ein von diesem Zeitpunkt abhängiger Hinweis gegeben wird. Hierzu ist der Lageparameter beispielsweise eine Länge des Datenkabels und das Gebiet ein Gebiet, das das Wirkelement mit intaktem Datenkabel erreichen kann. Da es nach einem Faserabriss für den Schützen nicht mehr möglich ist, einen Zielwechsel manuell zu steuern, muss dieses vor dem Faserabriss geschehen. Durch den gegebenen Hinweis, der als sinkende Sekundenzahl, kleiner werdender Balken, einer von Grün auf Rot sich ändernden Farbkodierung oder in anderer Weise erfolgen kann, kann der Schütze das ihm zur Verfügung stehende Zeitfenster optimal, also bis zum letztmöglichen Zeitpunkt nutzen.

Das Wirkelement kann ein lenkbarer oder ein rein ballistischer Körper sein, wobei auch Granaten und Splittergeschosse möglich sind. Insbesondere bei Splittergeschossen besteht das Problem, dass der Schütze eine Splitterwirkung nicht genau einschätzen kann. Es wäre daher für ihn vorteilhaft zu wissen, ob das im Ziel detonierende Wirkelement Kollateralschäden verursachen wird, beispielsweise Personen in der Nähe beeinträchtigen wird. Hierfür ist es vorteilhaft, wenn die Einsatzeigenschaft eine Kampfwirkung ist, beispielsweise eine Wirkung mit tödlichem oder anderen Effekt. Ein Wirkgebiet des Wirkelements bei einem Auftreffen sollte dem Schützen daher vor einem Abschuss angezeigt werden, damit er die Abfeuervorrichtung vor einem Abschuss entsprechend ausrichten kann, insbesondere bei einem rein ballistischen Geschoss.

Es wird daher in einer weiteren vorteilhaften Ausgestaltung der Erfindung vorgeschlagen, dass der momentane Zustand eine Ausrichtung der Abfeuervorrichtung und das Gebiet ein voraussichtliches Wirkgebiet ist, innerhalb dessen das aus der Abfeuervorrichtung abgefeuerte Wirkelement eine vorbestimmte Wirkung für das vorbestimmte Ziel entfaltet. Die vorbestimmte Wirkung kann eine vorbestimmte Beeinträchtigung sein. Die vorbestimmten Objekte sind zweckmäßigerweise in ihrer Art vorbestimmt, zum Beispiel Menschen mit vorbestimmter Kleidung oder Menschen in vorbestimmten Fahrzeugen. Der momentane Zustand kann eine Ausrichtung der Abfeuervorrichtung sein, in der das Wirkelement noch einliegt.

Selbstverständlich ist es auch möglich und vorteilhaft, unterschiedliche Grenzarten zu bestimmen und dem Schützen zweckmäßigerweise auch anzuzeigen. So kann beispielsweise dem Schützen ein Erreichbarkeitsgebiet angezeigt werden und außerdem eine Wirkgrenze, zweckmäßigerweise ebenfalls in Abhängigkeit von der momentanen Flugsituation des Wirkelements. Bei dieser Ausführungsform der Erfindung wird dem Schützen vor einem Zielwechsel Information darüber gegeben, ob er das alternative Ziel sinnvollerweise angreifen kann oder ob das alternative Ziel nur mit vermutlichen Kollateralschäden angreifbar ist. Ebenfalls ist es möglich, dass der Schütze ein Ziel ansteuert, jedoch später erkennt, dass mit dem Bekämpfen dieses Ziel Kollateralschäden verbunden wären und er deshalb einen Zielwechsel in Erwägung zieht. Durch die zusätzliche Einblendung der Erreichbarkeitsgrenze kann er einen Zielwechsel zu einem kollateralschadenärmeren oder kollateralschadenfreien Ziel dann so verfolgen, dass er dieses alternative Ziel auch sicher erreicht.

Vorteilhafterweise wird in die Ermittlung der Grenzen eine Streuwirkung des Wirkelements und insbesondere auch eine Schussentfernung einbezogen. Durch das Einbeziehen der Streuwirkung des Wirkelements kann die Einsatzeigenschaft mit hoher Güte bestimmt werden. Die Einbeziehung der Schussentfernung kann diese Angabe noch verbessern, da mit einer höheren Schussentfernung eine höhere Trefferunsicherheit einhergeht, beispielsweise durch Seitenwind oder andere Effekte, sodass ein mögliches Wirkgebiet mit einer größeren Schussentfernung größer anzusetzen ist, um Kollateralschäden sicher zu vermeiden.

Weiter ist es vorteilhaft, wenn die Ermittlung der Grenze einer Auswirkung eines Salvenschusses einbezogen wird. Ein Salvenschuss kann die Abfeuervorrichtung ein kleines Stück weit verreißen, sodass die einzelnen Wirkelemente gestreut ein größeres Zielgebiet erreichen. Die Größe dieses Zielgebiets wird hierbei zweckmäßigerweise in die Berechnung der Wirkgrenzen einbezogen.

Die Erfindung ist außerdem gerichtet auf ein Waffensystem mit einer Abfeuervorrichtung zum Abfeuern eines Wirkelements, einer Anzeigevorrichtung zum Anzeigen eines Zielgebiets für einen Schützen und mit einem Prozessmittel. Es wird gemäß der Erfindung vorgeschlagen, dass das Prozessmittel dazu vorbereitet ist, einen Lageparameter eines Gebiets zu ermitteln, innerhalb derer das Waffensystem in seinem momentanen Zustand eine vorbestimmte Einsatzeigenschaft erreicht.

Wie oben beschrieben kann hierdurch die Erreichbarkeit eines alternativen Ziels per einem Zielwechsel gewährleistet werden oder ein Wirkgebiet für einen Schützen abschätzbar gemacht werden. Ferner ist es zweckmäßig, wenn das Prozessmittel dazu vorbereitet ist, eine Abbildung eines von diesen Grenzen abhängigen Hinweises auf der Abbildungsvorrichtung zu steuern. Das Prozessmittel kann in der Abfeuervorrichtung oder im Wirkelement sein oder jeweils ein Prozesselement in der Abfeuervorrichtung und im Wirkelement haben, wobei diese beiden Prozesselemente zu einer Kommunikation miteinander vorbereitet sind.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale wird der Fachmann jedoch zweckmäßigerweise auch einzeln betrachten und zu sinnvollen weiteren Kombinationen zusammenfassen. Insbesondere sind diese Merkmale jeweils einzeln und in beliebiger geeigneter Kombination mit dem erfindungsgemäßen Verfahren und der erfindungsgemäßen Vorrichtung gemäß den unabhängigen Ansprüchen kombinierbar.

Die oben beschriebenen Eigenschaften, Merkmale und Vorteile der Erfindung, sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und/oder mit einem beliebigen der Ansprüche kombiniert werden.

Es zeigen:
- Fig. 1a-1c: Eine Landschaft mit einer Anzahl von darin befindlichen Zielen innerhalb eines Wirkgebiets eines Waffensystems,
- Fig. 2a-2b: einen Zielwechsel von einem ersten zu einem anderen Ziel,
- Fig. 3: eine Anzahl von Zielen mit einer Zeitanzeige, die anzeigt, wie viel Zeit für einen möglichen Zielwechsel verbleibt,
- Fig. 4a-4c: drei gemeinsam ausgesuchte Ziele, von denen eines priorisiert ist und schließlich angesteuert wird,
- Fig. 5a-5c: ein Ziel in einer Landschaft, das in einem Bogen von der Seite aus angeflogen wird,
- Fig. 6a-6d: alternative Darstellungsmethoden eines Erreichbarkeitsgebiets mit einer Anzahl von Zielen,
- Fig. 7: eine weitere alternative Anzeigemöglichkeit eines Erreichbarkeitsgebiets, das die Landschaftstopographie berücksichtigt und
- Fig. 8: eine schematische perspektivische Ansicht eines Waffensystems.

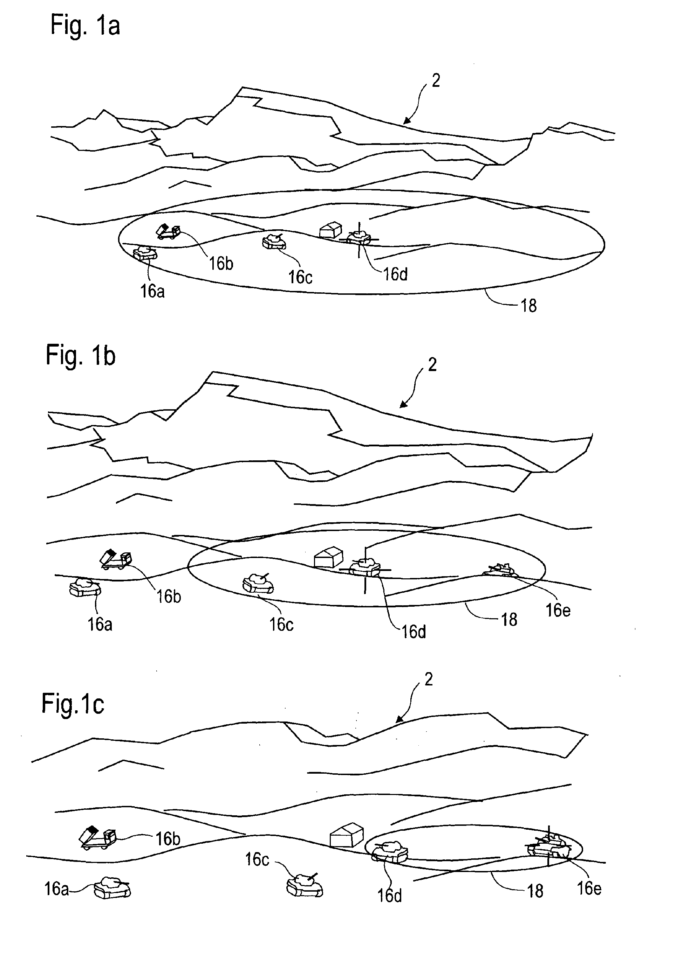

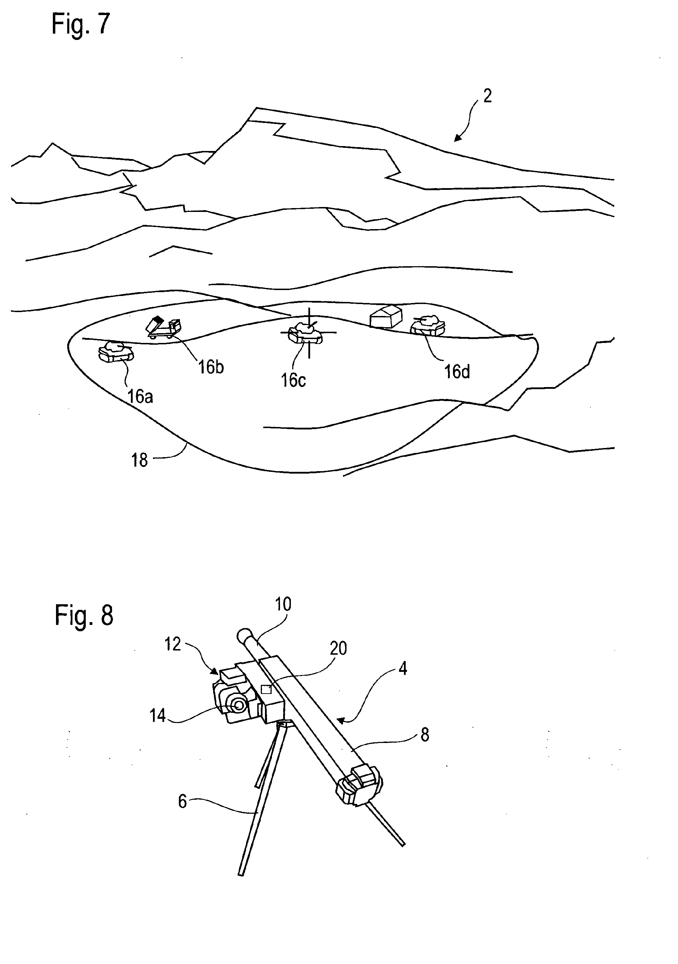

Fig. 1 zeigt eine beispielhafte Sicht in eine Landschaft 2, wie sie sich für einen Schützen eines Waffensystems 4 darstellt. Ein Ausführungsbeispiel eines Waffensystems 4 ist in Fig. 8 gezeigt. Das Waffensystem 4 ist eine Panzerabwehrwaffe mit einer auf einem Dreibein 6 stehenden Abfeuervorrichtung 8 zum Abschießen eines Wirkelements 10, wie einer Panzerabwehrrakete. Das Waffensystem 4 enthält eine Zielvorrichtung 12 mit einer Anzeigevorrichtung 14 mit einer Optik, durch die der Schütze in die Landschaft 2 schaut. Die Anzeigevorrichtung 14 enthält Mittel, durch die Hinweise in die Ansicht der Landschaft eingeblendet werden können. Die Abfeuervorrichtung 8 enthält die Zielvorrichtung 12, ein Eingabemittel, z.B. eine Tastatur, und die Anzeigevorrichtung 14.

Nach einem Abschuss verbleibt das Wirkelement 10 über eine nicht dargestellte Datenleitung in Form eines Glasfaserkabels, das sich am Heck des Wirkelements 10 abspult, mit der Abfeuervorrichtung 8 verbunden. Über eine Kamera am Kopf des Wirkelements 10 wird die Landschaft 2 aus Sicht des anfliegenden Wirkelements 10 aufgenommen und in der Anzeigevorrichtung 14 eingeblendet, sodass der Schütze eine Ansicht auf die Landschaft 2 aus Sicht des fliegenden Wirkelements 10 hat.

Fig. 1a zeigt eine solche Ansicht in die Landschaft 2, in der eine Anzahl von Zielen 16a-16d zu sehen sind. Vor, während oder nach dem Abschuss hat der Schütze eines der Ziele 16 zur Bekämpfung ausgewählt, in dem in Fig. 1 a wiedergegebenen Beispiel ist es das Ziel 16d. Durch einen Lock-On, den der Schütze an einem Eingabeelement der Zielvorrichtung 12 vorgenommen hat, ist das Ziel 16d optisch vom Waffensystem 4 erfasst und wird optisch verfolgt, sodass das anfliegende Wirkelement 10 eine Bewegung dieses Ziels 16d mit verfolgt und dieses Ziel 16d auch während dessen Bewegung treffen kann.

Durch die bestehende Datenverbindung zwischen dem Wirkelement 10 und der Abfeuervorrichtung 8 bleibt das Wirkelement 10 während seines Fluges vom Schützen steuerbar, sodass ein Zielwechsel durchführbar ist. Allerdings ist nicht zu jedem Zeitpunkt jedes Ziel 16 erreichbar, da das Wirkelement nach einer anfänglichen Schubphase schublos weiterfliegt und somit in seiner Reichweite deutlich eingeschränkt ist. Entsprechend dem Flugstadium des Wirkelements 10, dessen Flughöhe und Fluggeschwindigkeit sowie dessen kinematische Eigenschaften gibt es ein Gebiet 18, das in diesem Ausführungsbeispiel ein Erreichbarkeitsgebiet ist, das die Orte in der Landschaft abdeckt, die durch das Wirkelement 10 noch erreichbar sind. Objekte außerhalb dieses Gebiets 18 können von dem Wirkelement 10 nicht mehr angeflogen werden, da dessen Reichweite nicht ausreicht oder dessen kinematische Eigenschaften, beispielsweise dessen Lenkfähigkeit, einen Anflug nicht ermöglicht. Die Lage dieses Gebiets 18 in der Landschaft wird von einem Prozessmittel 20 des Waffensystems 4, das in Fig. 8 nur schematisch dargestellt ist, berechnet.

Die Berechnung geschieht in einem ersten Ausführungsbeispiel anhand einer Entfernung zu einem der Ziele 16 und der absolvierten Flugzeit, also der Zeit zwischen Abschuss und einem momentanen Zeitpunkt, sowie einer vorbestimmten Flugbahn, die dem Prozessmittel 20 bekannt ist. Weiter werden die Flugeigenschaften bzw. kinematischen Eigenschaften des Wirkelements 10 berücksichtigt. Unter Annahme einer Landschaftshöhe, die mit der topographischen Höhe des Schützen übereinstimmen kann, wird das entsprechende Gebiet 18 berechnet. Es ist möglich, topographische Daten mit einzubeziehen, wie dies in Fig. 7 angedeutet ist. Die topographischen Daten können in einer Bibliothek des Prozessmittels 20 hinterlegt sein oder vor dem Abschuss oder während des Flugs von einer Leitstelle, einem Flugzeug oder einer anderen Einrichtung abgerufen werden. Entsprechend der berücksichtigten topographischen Daten ist auch das Gebiet 18 an das Gelände angepasst, wie in Fig. 7 zu sehen ist. In die Berechnung des Gebiets können auch weitere Parameter mit einbezogen werden, beispielsweise ein aktueller Standort, der aus Satellitendaten ermittelt werden kann. Hierdurch können Seitenwinde und andere Flugfaktoren genauer erfasst werden, sodass auch die Prognose des Gebiets 18 korrekter ausfällt. Weiter besteht die Möglichkeit, eines oder mehrere der Ziele 16 mit Bilddaten einer Zieldatenbank zu vergleichen, in der verschiedene Ansichten einer Vielzahl von Zielen 16 hinterlegt sind. Durch einen Größenvergleich der sichtbaren Ziele 16 mit den hinterlegten Daten ist eine Abschätzung der momentanen Entfernung vom Wirkelement 10 zu dem entsprechenden Ziel 16 möglich.

Eine vorteilhafte Möglichkeit zur Bestimmung des Gebiets 18 besteht darin, eine äußere Begrenzung des Gebiets 18 zu bestimmen. Eine solche äußere Grenze ist in den Fig. 1a-1c dargestellt. Es ist jedoch auch möglich, einen oder mehrere andere Lageparameter des Gebiets 18 zu bestimmen, zum Beispiel eine Ausrichtung im Raum, eine Größe oder weitere Details, wie ein Kerngebiet, ein Randgebiet und dergleichen, je nachdem welche vorbestimmte Einsatzeigenschaft des Waffensystems in Verbindung mit dem Gebiet 18 steht. Bei dem in den Fig. 1a-1c gezeigten Ausführungsbeispiel ist der Lageparameter die äußere Grenze und die vorbestimmte Einsatzeigenschaft die Erreichbarkeit durch das Wirkelement 10.

In Fig. 1a ist dargestellt, wie die äußere Grenze des Gebiets 18 in die Abbildung, die dem Schützen über die Anzeigevorrichtung 14 gegeben wird, eingeblendet ist. Alle vier Ziele 16 liegen innerhalb der Grenze, sodass sie alle noch innerhalb der Erreichbarkeit des Wirkelements 10 liegen. Das Ziel 16d ist gelockt, sodass das Wirkelement 10 dieses Ziel 16d unmittelbar oder mittelbar über einen Bogen oder eine andere geeignete Flugbahn, anfliegt. Da jedoch alle Ziele 16 noch innerhalb der dargestellten Grenze liegen, ist ein Zielwechsel auf jedes dieser Ziele 16 noch möglich. Der Schütze könnte also das Lock-On auf das Ziel 16d aufheben und ein anderes der sichtbaren Ziele bekämpfen, beispielsweise das Ziel 16b. Entsprechend würde der Schütze den Lock-On auf das Ziel 16d aufheben und einen Lock-On auf das Ziel 16b vornehmen und das Wirkelement entsprechend nach links auf das neue Ziel 16b lenken, was durch den Lock-On auch automatisiert geschehen kann.

Der Schütze entschließt sich allerdings, den Lock-On auf das Ziel 16d beizubehalten, weil ihm dieses Ziel 16b als das Wichtigste erscheint.

Fig. 1 b zeigt die gleiche Landschaft 2 zu einem etwas späteren Zeitpunkt, beispielsweise drei Sekunden später. Das Gebiet 18 ist deutlich geschrumpft, da sich das Wirkelement 10 an das anvisierte Ziel 16d angenähert hat. Ein Zielwechsel auf die Ziele 16a, 16b ist nicht mehr möglich. Zwischenzeitlich ist ein weiteres Ziel 16e für den Schützen sichtbar geworden, das zuvor hinter einem Hügel verborgen war. Der Schütze erkennt im Verlauf des Anflugs, dass dieses neue Ziel 16e vorrangig bekämpft werden sollte, sodass er sich entschließt, die Bekämpfung des Ziels 16d aufzugeben und das neue Ziel 16e zu bekämpfen.

Die Darstellung des Gebiets 18 bzw. dessen äußerer Grenze innerhalb der Abbildung der Landschaft 2 bzw. des Zielgebiets, also eines Gebiets um die Ziele 16, hilft dem Schützen, die richtige Entscheidung zu treffen. Denn es ist ihm möglich, zu erkennen, ob das Wirkelement 10 in seinem momentanen Stadium das neue Ziel 16e noch erreichen kann, oder ob ein Zielwechsel zum Verlust des Wirkelements 10 führen würde. Anhand der Grenze des Gebiets 18 kann der Schütze zu dem in Fig.1b gezeigten Zeitpunkt erkennen, dass sich das neue Ziel 16e noch innerhalb des Erreichbarkeitsgebiets 18 befindet. Infolgedessen hebt er den Lock-On auf das Ziel 16d auf und führt einen Lock-On auf das neue Ziel 16e durch.

Diese Situation ist in Fig. 1c dargestellt. Das Gebiet 18 ist weiter geschrumpft entsprechend der weiter vorangeschrittenen Zeit bzw. der Annäherung des Wirkelements 10 an das Ziel 16e. Das alte Ziel 16d liegt an der Grenze des Gebiets 18 und wandert gerade aus dem Gebiet 18 heraus, was auch nicht weiter nachteilig ist, da es nicht weiter verfolgt wird. Durch die recht scharfe Steuerung des Wirkelement 10 nach rechts verbleibt das neue Ziel 16e innerhalb des Gebiets 18, das - bedingt durch die Rechtskurve des Wirkelements 10 - nur an seinem linken Rand stark schrumpft, wohingegen dessen rechter Rand weitgehend stabil in der Landschaft 2 verbleibt. Im weiteren und nicht dargestellten Verlauf fliegt das Wirkelement das Ziel 16e an und bekämpft dieses.

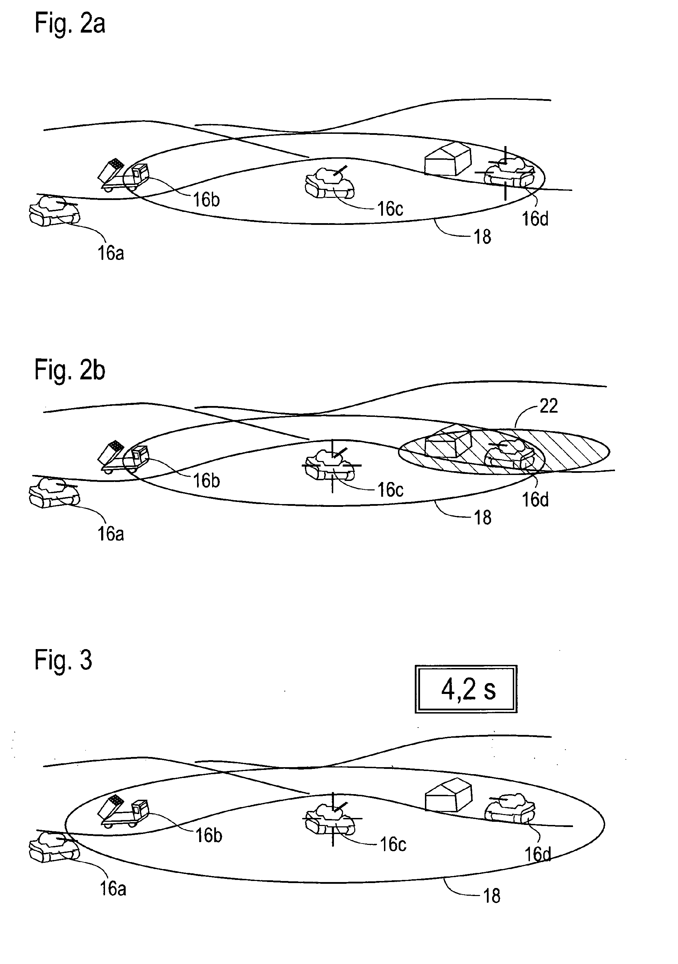

Die Fig. 2a und 2b zeigen ein weiteres und ähnliches Ausführungsbeispiel. In diesem Ausführungsbeispiel ist zunächst das Ziel 16c angeflogen worden, und es ist erst während des Flugs ein Zielwechsel auf das Ziel 16d vorgenommen worden, analog zu der Beschreibung aus Fig. 1. Durch eine entsprechende Eingabe am Waffensystem 4 möchte der Schütze nun eine weitere Einsatzeigenschaft seines Waffensystems 4 bzw. des Wirkelements 10 wissen. Diese Einsatzeigenschaft ist eine Letalität des Wirkelements 10 im Ziel 16d. Das Waffensystem 4 bzw. dessen Prozessmittel 20 berechnet nun das Gebiet 22, innerhalb dessen eine Detonation des Wirkelements 10 zu einer vermutlichen Tötung von ungeschützten Personen führen würde. Die Lage des Gebiets 22 wird aus der momentanen Entfernung des Wirkelements 10 vom Ziel 16e sowie dessen Fluggeschwindigkeit und Detonationskraft sowie dessen Anflugwinkel auf den Boden bzw. das Ziel 16e von oben berechnet.

Dieses Gebiet 22 wird dem Schützen in Fig. 2b eingeblendet und ist auf der rechten Seite der Zeichnung schraffiert abgebildet. Der Schütze kann erkennen, dass sich ein Haus 24, in dem sich vermutlich unbeteiligte Zivilisten aufhalten, innerhalb des Gebiets 22 liegt. Ein Bekämpfen des anvisierten Ziels 16e würde daher gegebenenfalls zu unerwünschten Kollateralschäden führen. Entsprechend revidiert der Schütze seine Entscheidung des vorangegangenen Zielwechsels und wechselt auf ein neues mögliches Ziel, in dem in Fig. 2b gezeigten Ausführungsbeispiel wieder auf das Ziel 16c.

Das in den Fig. 2 gezeigte Ausführungsbeispiel kann in vielfältiger Weise abgewandelt werden. So kann das Gebiet 22 beispielsweise einem Artillerieschützen oder dem Schützen eines Granatwerfers vor dem Abschuss angezeigt werden, sodass der Schütze sein Waffensystem entsprechend ausrichten kann, bevor das Wirkelement beispielsweise eine Granate, aus der Abfeuervorrichtung abgeschossen wird. Die Bestimmung und Abbildung des Erreichbarkeitsgebiets 18 kann beibehalten oder weggelassen werden. Bei der Berechnung des Gebiets 22 können viele Faktoren einbezogen werden, beispielsweise wie weit geschützte oder ungeschützte Personen in Gefahr sind, inwieweit eine Splitterwirkung des Wirkelements reicht, auch topographische Parameter, wie schützende Hügel oder Mauern können Berücksichtigung finden. Auch das Einbeziehen eines Salvenschusses, z.B. bei einem Granatwerfer, ist sinnvoll, um damit verbundene Einflüsse auf den Lageparameter zu berechnen.

In Fig. 2b ist das Gebiet 22 zusätzlich um Gebiet 18 gezeigt. Selbstverständlich ist es auch möglich, einem Schützen nur das Wirkgebiet 22 anzuzeigen. Das Waffensystem kann auch so sein, dass es nur die Berechnung des Wirkgebiets 22 vermag und ein Erreichbarkeitsgebiet nicht berechnet werden kann. Allerdings kann es auch für den Schützen eines nicht lenkbaren Wirkelements sinnvoll sein, das Erreichbarkeitsgebiet seines Wirkelements anzuzeigen, um ihm darzustellen, wie weit sein Wirkelement fliegen kann oder welches Gebiet er mit einer ausreichenden Treffsicherheit erreichen kann.

Fig. 3 zeigt ein weiteres Ausführungsbeispiel. Das Wirkelement 10 fliegt auf das Ziel 16c zu, entweder erstmalig oder nach einem Zielwechsel. Das Ziel 16c ist allerdings weiter entfernt vom Schützen gelegen, als die Datenleitung zwischen der Abschussvorrichtung 8 und dem Wirkelement 10 reicht. Infolgedessen wird die Datenleitung während des Flugs abreißen, sodass eine weitere Steuerung des Wirkelements durch den Schützen oder die Abfeuervorrichtung 8 nicht mehr möglich ist. Da auch das Wirkelement 10 ein Prozessmittel aufweisen kann, das zu einer automatisierten Steuerung des Wirkelements 10 in der Lage ist, ist eine weitere Bekämpfung des Ziels 16c durchaus möglich, lediglich der manuelle Eingriff, zum Beispiel in Form eines Zielwechsels, ist nicht mehr möglich.

Um den Schützen diese Handlungseinschränkung zu zeigen, ist in der Abbildung, die dem Schützen durch die Anzeigevorrichtung geliefert wird, eine Anzeige eingeblendet, die einen Hinweis auf einen Lageparameter gibt, nämlich eine Reichweitengrenze des Wirkelements 10. Außerhalb dieser Grenze reduziert sich die Einsatzeigenschaft des Waffensystems und des Wirkelements 10 deutlich, da der manuelle Eingriff nicht mehr möglich ist. Die Grenze wird nicht als Bild sondern als Zahl, beispielsweise als Sekundenzahl bis zum Abriss, angezeigt. Selbstverständlich sind auch andere Anzeigemöglichkeiten denkbar, beispielsweise ein sich verkleinernder Balken oder ein farbiges Element, das von grün auf rot oder eine andere Farbe wechselt.

Auch das Erreichbarkeitsgebiet 18 der Ausführungsbeispiele kann generell auf andere Weise und nicht nur in Form der äußeren Grenze dargestellt werden. So kann beispielsweise das Erreichbarkeitsgebiet eingefärbt werden, mit einer scharfen Grenze oder einer fließenden Grenze oder auf eine andere Art. Es ist auch möglich, lediglich die Ziele zu kennzeichnen, die erreichbar oder nicht mehr erreichbar sind, sodass beispielsweise alle erreichbaren Ziele grün und alle nicht mehr erreichbaren Ziele rot eingefärbt sind, so sie denn vom Waffensystem 4 als solche erkannt wurden. Auch andere Anzeigemöglichkeiten, wie Balken, Pfeile oder Zahlen oder dergleichen sind möglich.

Bei der in Fig. 3 dargestellten Situation verbleibt dem Schützen noch ein Zeitraum vom 4,2 Sekunden, innerhalb dessen er einen manuellen Zielwechsel durchführen kann. Aus der Darstellung des Gebiets 18 weiß der Schütze, dass er noch auf das Ziel 16b oder das Ziel 16d wechseln kann. Dies muss jedoch innerhalb von der verbleibenden Restzeit von 4,2 Sekunden geschehen.

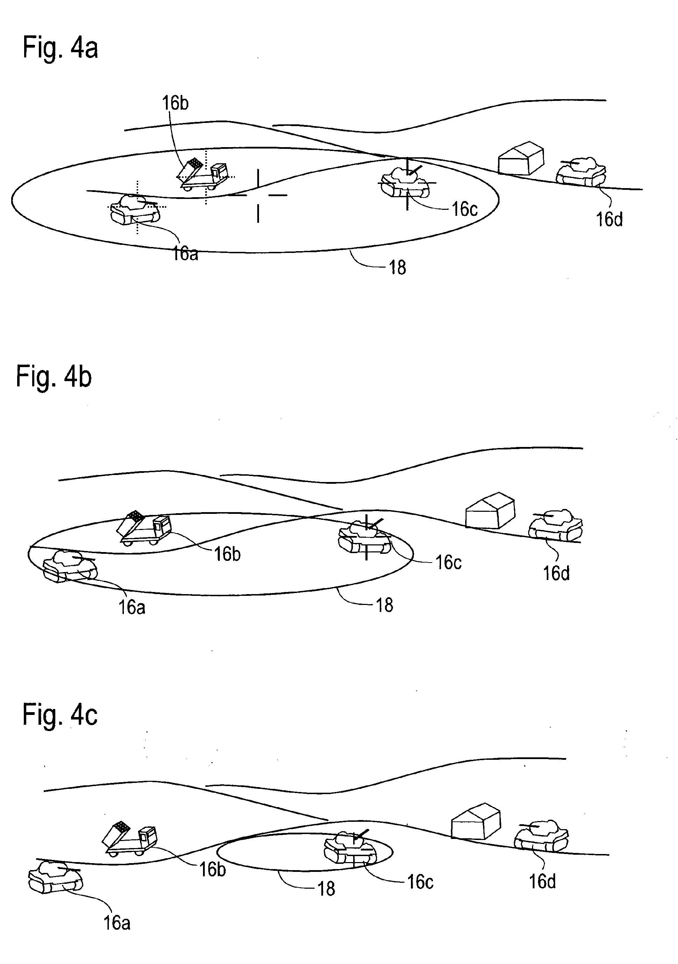

Ein nächstes Ausführungsbeispiel ist anhand der Fig. 4a-4c erläutert. Vor oder nach dem Abschuss hat der Schütze drei der Ziele 16, nämlich die Ziele 16a, 16b, 16c, markiert. Beispielsweise ist sich der Schütze aus seiner Abschussposition nicht sicher, welches der Ziele 16 er bekämpfen will. Also schießt er das Wirkelement in Richtung der Ziele 16, um während des Flugs mit Hilfe der Kamera des Wirkelements 10 eine bessere Übersicht über die Landschaft 2 und die Ziele 16 zu erreichen. Hierbei ist dem Schützen daran gelegen, alle markierten Ziele möglichst lange anfliegen zu können. Entsprechend sollten alle die markierten Ziele möglichst lange innerhalb des Gebiets 18 verbleiben.

Das Prozessmittel 20 des Waffensystems 4 ist hierbei dazu vorbereitet, einen Lagepunkt aus den markierten Zielen 16 zu bestimmen, der einen längstmöglichen Zielwechsel ermöglicht. Dieser Lagepunkt ist in Fig. 4a zwischen den Zielen 16b, 16c dargestellt. Bei der Berechnung des Lagepunkts wird eine Bewegung der Ziele 16a-16c berücksichtigt, z.B. deren Bewegung relativ zueinander, absolut in der Landschaft 2 oder relativ zu einer Richtung des Wirkelements, z.B. einer optischen Achse.

Das Wirkelement 10 fliegt also mitten in die Landschaft 2 und nicht auf eines der Ziele 16 zu. Während des Flugs schrumpft das Gebiet 18 in der Landschaft 2, jedoch so, dass die markierten Ziele 16 längstmöglich gemeinsam innerhalb des Gebiets 18 verbleiben. Würde das Wirkelement beispielsweise auf das Ziel 16c zusteuern, so würde das Ziel 16a relativ schnell aus dem Gebiet 18 auswandern, wohingegen ein Gebiet rechts vom anvisierten Ziel 16c unnötig lange innerhalb des Gebiets 18 verbleibt. Entsprechend ist das Fliegen des Wirkelements zwischen die Ziele 16 sinnvoll. Dies erfolgt vorteilhafterweise automatisiert. Da die Bewegungen der Ziele berücksichtigt werden, wie bei den vorangegangenen Beispielen auch, muss der anvisierte Punkt in der Landschaft 2 nicht fix sein, sondern kann entsprechend der Zielbewegungen mitwandern. Entsprechend wandert auch die Grenze des Gebiets 18 bzw. das Gebiet 18 wird entsprechend dem Flug und damit der Bewegung der Ziele 16 stets neu berechnet.

Zusätzlich zur Markierung der drei Ziele 16 hat der Schütze eines der Ziele 16 priorisiert. Dieses Ziel 16c wird somit vorrangig bekämpft und kann in der Abbildung besonders markiert werden.

Fig. 4b zeigt die Szene zu einem späteren Zeitpunkt. Das Gebiet 18 ist weiter geschrumpft, schließt jedoch alle markierten Ziele 16 weiterhin ein. Diese Ziele 16 sind jedoch an den Rand bzw. die Grenze des Gebiets 18 gewandert, sodass nun eine Entscheidung über das endgültige Ziel getroffen werden muss. Diese Entscheidung kann durch den Schützen getroffen werden oder automatisiert erfolgen. Bei der automatisierten Auswahl wird die Priorisierung berücksichtigt und dieses Ziel 16c wird vorrangig bekämpft. Entsprechend wird das Wirkelement 10 so gesteuert, dass dieses Ziel 16c nicht aus dem Bereich 18 auswandert. Dies bedingt, dass das Wirkelement 10 einen - in diesem Ausführungsbeispiel - Bogen nach rechts fliegen muss, um das priorisierte Ziel 16c noch erreichen zu können. Die beiden anderen Ziele 16a, 16b wandern aus dem Bereich 18 aus, wie dies in Fig. 4c dargestellt ist. Das vorrangige Ziel 16c wird anschließend bekämpft.

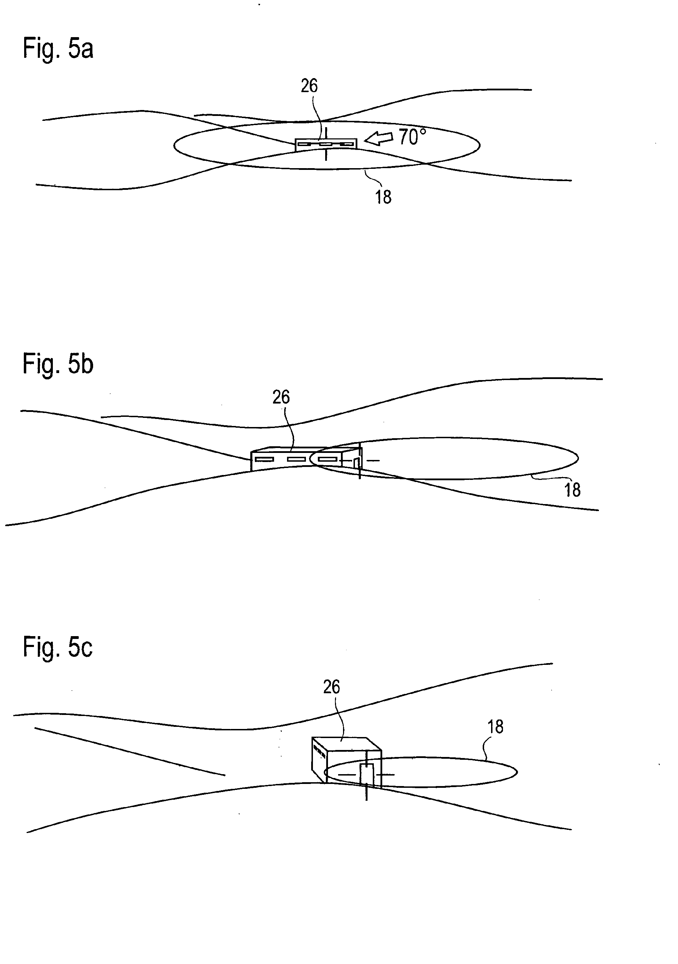

Ein weiteres Ausführungsbeispiel der Erfindung ist in den Fig. 5a-5c gezeigt. Es soll ein Ziel 26 in Form eines verstärkten Gebäudes bekämpft werden. Aufgrund der Verstärkung ist die direkte Bekämpfung des Gebäudes nicht möglich, es ist allerdings eine Bekämpfung von der Seite möglich, da eine nur leicht gepanzerte Tür dort vorhanden ist, die von dem Wirkelement 10 durchbrochen werden kann. Diese ist allerdings so gelegen, dass sie beispielsweise für den Schützen nicht sichtbar ist, wie in Fig. 5a gezeigt ist.

Entsprechend stellt der Schütze einen Anflugwinkel ein, im gezeigten Ausführungsbeispiel 70° von rechts. Um diesen Anflug zu verwirklichen, muss das Wirkelement 10 somit weit nach rechts fliegen, um in einem Linksbogen die gewünschte Anflugrichtung auf das Ziel 26 durchführen zu können. Um das Gebiet 18 günstig legen zu können, führt der Schütze einen Lock-On auf das Ziel 26 durch. Die in Fig. 5a dargestellte Situation kann vor dem Abschuss stattfinden, sodass die Anflugrichtung vor dem Abschuss festgelegt wird. Es kann jedoch sein, dass die Sicht des Schützen nicht ausreicht, sodass er das Wirkelement zunächst abfeuert und die Anflugrichtung erst während des Flugs festlegt.

Den Anflug zu einem späteren Zeitpunkt zeigt Fig. 5b. Entsprechend der Anflugrichtung von rechts fliegt das Wirkelement sehr weit nach rechts ausgerichtet, sodass das Erreichbarkeitsgebiet 18 entsprechend sehr weit rechts relativ zum Ziel 26 gelegen ist. Das Ziel ist jedoch weiterhin innerhalb des Gebiets 18. Wird nun die Tür des verstärkten Gebäudes für den Schützen sichtbar, so kann er einen Zielwechsel vom allgemeinen Gebäude auf die Tür festlegen, wie in Fig. 5b gezeigt ist.

In Fig. 5c ist die Anflugrichtung erreicht und das Wirkelement fliegt von der Seite auf das Ziel 26 zu. Der Flug des Wirkelements 10 ist hierbei abhängig von dem Gebiet 18 bzw. dessen Grenze, das der Flug so gesteuert wird, dass das Ziel 26 stets innerhalb des Gebiets 18 verbleibt. Entsprechend kann das Wirkelement nur so fliegen, dass das Ziel 26 nicht aus dem Gebiet 18 auswandert. Durch den Lock-On auf das Ziel 26 und die vorgegebenen Anflugrichtung kann das Prozessmittel 20 die Flugbahn in Abhängigkeit vom Erreichbarkeitsgebiet 18 selbständig berechnen, sodass eine Flugsteuerung nicht als Aufgabe des Schützen verbleibt. Dieser kann lediglich Flug assistierend eingreifen, um beispielsweise den Zielwechsel auf die Tür vorzunehmen.

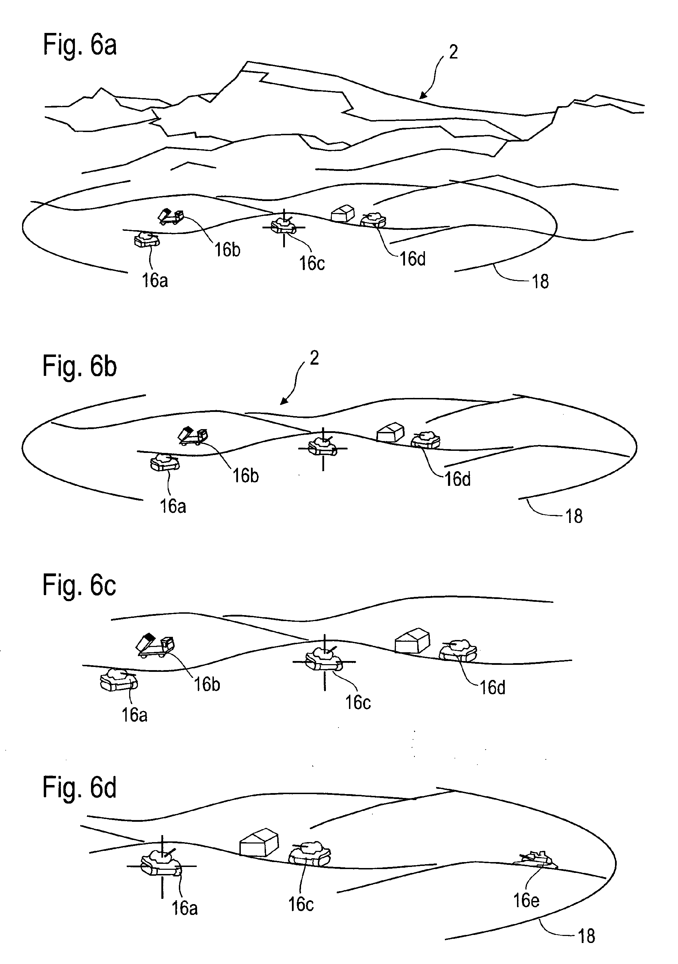

Anstelle der bisher beschriebenen Darstellungsmöglichkeit des Gebiets 18 sind auch andere Darstellungsformen denkbar und sinnvoll. So ist in Fig. 6a eine zu Fig.1a analoge Situation gezeigt, wobei das Gebiet 18 jedoch nur seitlich dargestellt ist. Auf die Darstellung einer eher unzuverlässigen Tiefeninformation wird verzichtet.

Fig. 6b zeigt eine weitere Darstellungsvariante, bei der dem Schützen nur das Gebiet dargestellt ist, das innerhalb des Gebiets 18 liegt. Nach dem Motto "you see what you get" kann der Schütze somit sehr leicht und schnell einschätzen, welches der Ziele 16 er noch erreichen kann.

Eine ähnliche Situation ist in Fig. 6c gezeigt. Das angezeigte Gebiet ist jedoch kleiner als das Erreichbarkeitsgebiet 18, sodass keine Grenze dargestellt ist. Der Schütze weiß allerdings, dass er das gesamte dargestellte Gebiet 18 noch erreichen kann. Nun kann es durchaus sein, dass der Schütze auch nicht dargestellte Bereiche rechts und links des momentan dargestellten Bereichs einsehen möchte. Entsprechend kann er die Abbildung verschwenken, beispielsweise durch eine Schwenkbewegung der Kamera des anfliegenden Wirkelements 10.

Diese Situation ist in Fig. 6d gezeigt. Der Schütze hat den Blick nach rechts geschwenkt, sodass die Gebietsgrenze 18 im Bild sichtbar wird. Außerdem wird das Ziel 16e sichtbar, auf das der Schütze später einen Zielwechsel vornehmen wird. Entsprechend sind selbstverständlich auch andere Schwenks oder Zoom-Vorgänge möglich. Diese Sichtschwenk-Vorgänge müssen allerdings einen Flug des Wirkelements 10 nicht beeinträchtigen, sodass das Wirkelement 10 beispielsweise auf das Ziel 16c weiter zufliegt.

### Bezugszeichenliste

| | |
|---|---|
| 2 | Landschaft |
| 4 | Waffensystem |
| 6 | Dreibein |
| 8 | Abfeuervorrichtung |
| 10 | Wirkelement |
| 12 | Zielvorrichtung |
| 14 | Anzeigevorrichtung |
| 16a-e | Ziel |
| 18 | Gebiet |
| 20 | Prozessmittel |
| 22 | Gebiet |
| 24 | Haus |
| 26 | Ziel |

## Patentansprüche

1. Verfahren zum Lenken eines Wirkelements (10) durch einen Schützen in ein Ziel (16) mit einem Waffensystem (4), das eine Abfeuervorrichtung (8) zum Abfeuern des Wirkelements (10) aufweist, bei dem ein Lageparameter eines Gebiets (18) ermittelt wird, innerhalb derer das Waffensystem (4) in seinem momentanen Zustand eine vorbestimmte Einsatzeigenschaft erreicht.

2. Verfahren nach Anspruch 1,
**dadurch gekennzeichnet,**
**dass** das Waffensystem (4) eine Anzeigevorrichtung (14) für den Schützen aufweist und ein vom Lageparameter abhängiger Hinweis auf der Anzeigevorrichtung (14) abgebildet wird.

3. Verfahren nach Anspruch 1 oder 2,
**dadurch gekennzeichnet,**
**dass** der Lageparameter eine Grenze eines Gebiets (18) ist, innerhalb derer das Waffensystem (4) in seinem momentanen Zustand eine vorbestimmte Wirkung entfaltet.

4. Verfahren nach einem der vorhergehenden Ansprüche,
**dadurch gekennzeichnet,**
**dass** der Lageparameter eine Grenze eines Gebiets (18) ist und bei der Ermittlung der Grenze die Kinematik des aus der Abfeuervorrichtung (8) abgefeuerten Wirkelements (10) berücksichtigt wird.

5. Verfahren nach einem der vorhergehenden Ansprüche,
**dadurch gekennzeichnet,**
**dass** der Lageparameter eine Grenze eines Gebiets (18) ist und bei der Ermittlung der Grenze der Abstand des Wirkelements (10) zum Ziel (16) berücksichtigt wird.

6. Verfahren nach Anspruch 5,
**dadurch gekennzeichnet,**
**dass** zur Ermittlung des Abstands ein Bildabgleich des Ziels (16) mit Bildern einer Bildbibliothek mit größengestaffelten Abbildern typischer Ziele erfolgt.

7. Verfahren nach einem der vorhergehenden Ansprüche,
**dadurch gekennzeichnet,**
**dass** der Lageparameter eine Grenze eines Gebiets (18) ist und bei der Ermittlung der Grenze eine Topografie eines Zielgebiets um das Ziel (16) berücksichtigt wird.

8. Verfahren nach einem der vorhergehenden Ansprüche,
**dadurch gekennzeichnet,**
**dass** ein Lock-On auf das Ziel (16) durchgeführt wird und bei der Ermittlung der Grenzen eine Bewegung des Ziels (16) berücksichtigt wird.

9. Verfahren nach einem der vorhergehenden Ansprüche,
**dadurch gekennzeichnet,**
**dass** ein Lock-On auf das Ziel (16) während des Flugs des Wirkelements (10) aufgehoben wird und in Abhängigkeit davon, ob ein zweites Ziel (16) innerhalb der Grenzen positioniert ist, ein neuer Lock-On auf das zweite Ziel (16) durchgeführt wird.

10. Verfahren nach einem der vorhergehenden Ansprüche,
**dadurch gekennzeichnet,**
**dass** während des Flugs des Wirkelements (10) mehrere Ziele (16) verfolgt werden und das Wirkelement (10) zwischen die Ziele (16) gesteuert wird.

11. Verfahren nach einem der vorhergehenden Ansprüche,
**dadurch gekennzeichnet,**
**dass** eine Bewegung von zumindest zwei voneinander getrennten Zielen (16) verfolgt wird und eine Flugsteuerung des Wirkelements (10) in Abhängigkeit von einer ermittelten Grenze des Gebiets (18) vorgenommen wird.

12. Verfahren nach Anspruch 11,
**dadurch gekennzeichnet,**
**dass** eines der Ziele (16) priorisiert wird und der Lock-On auf dieses Ziel (16) erfolgt, wenn zumindest eines der Ziele (16) die Grenze erreicht.

13. Verfahren nach Anspruch 12,
**dadurch gekennzeichnet,**
**dass** das Wirkelement
- auf das priorisierte Ziel (16) gelenkt wird, so lange bis das andere Ziel (16) die Grenze erreicht,
- dann so gesteuert wird, dass beide Ziele (16) innerhalb der Grenze verbleiben, so lange, bis beide Ziele (16) die Grenze erreichen,
- dann auf das priorisierte Ziel (16) gelenkt wird, so dass das andere Ziel (16) die Grenze überschreitet.

14. Verfahren nach einem der vorhergehenden Ansprüche,
**dadurch gekennzeichnet,**
**dass**
- eine Anflugrichtung des Wirkelements (10) auf das Ziel (26) festgelegt wird,
- das Wirkelement (10) in seinem Anflug auf das Ziel (26) so weit vom Ziel (26) ausgelenkt wird, dass das Ziel (26) innerhalb der Grenze verbleibt,
- das Wirkelement auf das Ziel (26) einschwenkt, so dass es aus der Anflugrichtung auf dieses zu fliegt.

15. Verfahren nach einem der vorhergehenden Ansprüche,
**dadurch gekennzeichnet,**
**dass** der Lageparameter eine Grenze eines Erreichbarkeitsgebiets ist, das für das aus der Abfeuervorrichtung (8) abgefeuerte und durch den Schützen im Flug steuerbare Wirkelement (10) zum momentanen Flugzeitpunkt noch erreichbar ist und nur das Erreichbarkeitsgebiet auf der Anzeigevorrichtung (14) abgebildet wird.

16. Verfahren nach einem der vorhergehenden Ansprüche,
**dadurch gekennzeichnet,**
**dass** der Schütze während des Fluges des Wirkelements (10) ein auf der Anzeigevorrichtung (14) abgebildetes Abbildungsgebiet und damit auch eine Darstellung des Gebiets (18) auf der Anzeigevorrichtung verschwenkt, ohne dabei die Flugrichtung des Wirkelements (10) zu beeinflussen.

17. Verfahren nach einem der vorhergehenden Ansprüche,
**dadurch gekennzeichnet,**
**dass** der momentane Zustand eine Ausrichtung der Abfeuervorrichtung (8) und das Gebiet (18) ein voraussichtliches Wirkgebiet ist, innerhalb dessen das aus der Abfeuervorrichtung (8) abgefeuerte Wirkelement (10) eine vorbestimmte Wirkung für vorbestimmte Ziele (16) entfaltet.

18. Verfahren nach einem der vorhergehenden Ansprüche,
**dadurch gekennzeichnet,**
**dass** der Lageparameter eine Grenze eines Gebiets (18) ist und in die Ermittlung der Grenze eine Schussentfernung und eine Streuwirkung des Wirkelements (10) einbezogen werden.

19. Verfahren nach einem der vorhergehenden Ansprüche,
**dadurch gekennzeichnet,**
**dass** der Lageparameter eine Grenze eines Gebiets (18) ist und in die Ermittlung der Grenze eine Auswirkung eines Salvenschusses einbezogen wird.

20. Waffensystem (4) mit einer Abfeuervorrichtung (8) zum Abfeuern eines Wirkelements (10), einer Anzeigevorrichtung (14) zum Anzeigen eines Zielgebiets und einem Prozessmittel (20), das dazu vorbereitet ist, einen Lageparameter eines Gebiets (18) zu ermitteln, innerhalb derer das Waffensystem (4) in seinem momentanen Zustand eine vorbestimmte Einsatzeigenschaft erreicht.
